**Europäisches Patentamt**

**European Patent Office**

**Office européen des brevets**

(19)

(11) Veröffentlichungsnummer: **0 192 112**
A2

## (12) EUROPÄISCHE PATENTANMELDUNG

(21) Anmeldenummer: **86101346.4**

(22) Anmeldetag: **03.02.86**

(51) Int. Cl.⁴: **B 60 C 3/00**
**B 60 C 17/00, B 60 C 15/02**

(30) Priorität: **16.02.85 DE 3505403**

(43) Veröffentlichungstag der Anmeldung:
**27.08.86 Patentblatt 86/35**

(84) Benannte Vertragsstaaten:
**BE FR GB IT**

(71) Anmelder: **BAYER AG**
**Konzernverwaltung RP Patentabteilung**
**D-5090 Leverkusen 1 Bayerwerk(DE)**

(72) Erfinder: **Stüttgen, Friedel**

**vestorben(DE)**

(72) Erfinder: **Stollfuss, Bernd**
**Am Katterbach 76**
**D-5060 Bergisch-Gladbach 2(DE)**

(72) Erfinder: **Schnetger, Jochen, Dr.**
**Hollweg 13**
**D-5074 Odenthal(DE)**

(54) **Luftreifen mit Notlaufeigenschaften.**

(57) Ein Luftreifen mit Notlaufeigenschaften, der eine selbsttragende trapezförmige Form besitzt, die aus einem Unterbau von mehreren Teilen und einem Oberbau (6) aus gespritztem Gummi besteht.

FIG. 1

EP 0 192 112 A2

BAYER AKTIENGESELLSCHAFT     5090 Leverkusen, Bayerwerk
Konzernverwaltung RP
Patentabteilung     Kr/li-c

## Luftreifen mit Notlaufeigenschaften

Die Erfindung betrifft einen Luftreifen mit Notlaufeigenschaften bei Luftverlust - enthaltend Lauffläche,
Verstärkungseinlagen, Kern, Kernfüller und luftdichte
Innen-Platte - und ein Verfahren zu seiner Herstellung.

Die Fahrzeugindustrie ist an einem Luftreifen interessiert, der auch bei starkem Luftverlust sicher und
über längere Zeit Eigenschaften beibehält, die ein
Weiterfahren des Fahrzeuges erlauben.

Die Reifenhersteller haben in der Vergangenheit verschiedene Reifensysteme entwickelt und zur Produktionsreife gebracht. Bei allen diesen Systemen wird davon
ausgegangen, daß der in der üblichen Art konstruierte
Reifen bei Luftverlust seine stabile Form verliert, um
dann auf eigens dafür vorgesehenen Gleitflächen der
Felgen aufzusetzen, um so die Notlaufeigenschaften zu
gewährleisten.

Le A 23 663

Nachteil dieser Konstruktion ist infolge einer Vergrößerung der Aufstandsfläche die starke Durchwalkung
des formlosen Gummireifens und die Reibung an den Gleitflächen, die zwangsläufig zur starken Erwärmung des
Gummis führen, wodurch dieser in kurzer Zeit zerstört
wird.

Der Erfindung liegt die Aufgabe zugrunde, einen hitzeunempfindlichen, einfach aufgebauten Reifen zu finden,
der auch bei Luftverlust des Reifens - z. B. infolge
Verletzung der Reifen-Decke durch einen Nagel - seine
Form im wesentlichen beibehält, um mindestens bei reduzierter Geschwindigkeit noch ausreichende Fahreigenschaften über eine längere Strecke zu besitzen und der
leicht sowie sicher bei guter Ausnutzung teurer Arbeitsgeräte herzustellen ist.

Die Aufgabe wird erfindungsgemäß dadurch gelöst, daß der
Reifen bei einem Verhältnis Höhe zu Breite zwischen
0,45 - 0,55 eine Breite der Lauffläche zwischen den
Schultern von 0,7 - 0,8 der Felgenbreite besitzt, daß
die Seitenwand im Bereich zwischen Schulter und dem am
axial weiter außenliegenden Felgenhorn angrenzenden Teil
in axialer Richtung Lageänderungen nur nach außen besitzt, wobei der gemittelte Neigungswinkel zur Radialebene 25-35° beträgt und daß die Gesamtdicke von Lauffläche und Unterbau im Bereich zwischen den Schultern
10-16 % sowie von der Seitenwand 7-12 % der Felgenbreite
beträgt.

<u>Le A 23 663</u>

Bei dem erfindungsgemäßen Reifen fällt im Gegensatz zum herkömmlichen Reifen, der seine maximale Breite etwa in der Mitte zwischen Schulter und Felgenhorn hat, die Seitenwand von den Schultern in gerader und/oder gekrümmter Neigung nach außen zu dem axial weiter außenliegenden Felgenhorn so ab, daß keine Umkehr der Neigung über die Radialebene hinaus eintritt. Die größte Breite des Reifens liegt also am Felgenhorn. Mit der vorgeschlagenen Konstruktion, bei der insbesondere die gemittelte Seitenwandlinie vorzugsweise gerade ist und einen Neigungswinkel zwischen 10-35° zur Radialebene besitzt, ist es möglich, die Kräfte, auch bei starkem Luftverlust beispielsweise durch Verletzung der Reifendecke mit einem Nagel, noch ohne wesentliche Deformationen des Reifens vom Fahrzeug auf die Straße zu übertragen. Der Reifen besitzt also echte Notlaufeigenschaften. Die Nachteile des herkömmlichen Reifens, der nämlich die Form verliert, werden vermieden und somit treten keine Karkassenbrüche durch Gewebestauchungen und Zerstörungen des Gummis durch Hitzeentwicklung infolge starker Walk- bzw. Reibarbeit beim Anliegen an metallenen Abstützungen des Felgens auf. Weiter ist erstaunlich, daß trotz des anderen Federungssystems - der herkömmliche Reifen wird in der Reifenwand stark durchgebogen - mit dem erfindungsgemäßen Reifen etwa gleichwertige Fahreigenschaften erzielt werden können.

In einer besonderen Ausführungsform besitzt die Lauffläche zwischen den Schultern bei einer Dicke von 50 - 72 % - bezogen auf die Gesamtdicke - Profiltiefen bis zur Hälfte der obigen Prozentzahlen.

Le A 23 663

Durch eine große Dicke des Gummis oberhalb der Verstärkung wird die Friktion der Lauffläche zur Straße verbessert; gleichzeitig sorgen die großen Profileinschnitte in der Lauffläche für ausreichende Kühlung.

In einer bevorzugten Ausführungsform verläuft die innere Reifenkontur von der Fußzehe an geradlinig unter einem Winkel $\alpha_2$ von 10-35°, insbesondere 12-18°, zur Radialebene mit Neigung in Richtung des Zenith, um dann nach einem Bogen mit einem Radius $R_5$ = 15-30% - bezogen auf die Reifenbreite - eine Richtung etwa parallel zur Lauffläche einzuschlagen.

Diese spezielle trapezförmige innere Reifenkontur mit ausgerundeten Ecken (vorzugsweise $R_5$ = 20-25%) leitet auch bei Druckverlust die Kräfte des Fahrzeugs sicher auf die Straße über und läßt sich zudem mit einfachen Werkzeugen wegen fehlender Hinterschnitte leicht herstellen.

In einer weiteren Ausführungsform erfolgt der Übergang von den Laufflächen zum äußeren Seitenwandteil über einen konkaven Bogen, dessen Radius $R_3$ 9-15 % der Felgenbreite bei einer Einschnürtiefe der Seitenwand von 3-6 % der Felgenbreite beträgt.

Durch den zum Reifeninneren gekrümmten Bogen wird erreicht, daß kritische Temperaturen durch dynamische Belastung beim Umlenken der Kräfte von der mit dem Boden

Le A 23 663

in Berührung kommenden Lauffläche in das Seitenwandteil vermieden werden.

In einer durchgeführten Ausführungsform sind mindestens zwei Verstärkungslagen aus textilem Kord im Bereich unterhalb der Lauffläche angeordnet, von denen mindestens eine eine Überdeckung von 25 mm oder mehr eines Stoßes einer benachbarten Verstärkungslage mit einem seitlichen Rand einer den Kern umgebenden Verstärkung aufweist.

Durch die Überdeckung beispielsweise des Stoßes zwischen textilem Gurt und textilem Kernumschlag mittels eines textilen Gürtels wird ein ausreichender Verbund aller Verstärkungslagen hergestellt, der gegebenenfalls noch durch gesonderte Zulagen in dem Überschneidungsbereich verstärkt werden kann.

In einer möglichen Ausführungsform ist als Verstärkungslage im Bereich unterhalb der Lauffläche mindestens ein Textil-Gürtel mit entlang des Umfanges laufendem Kord und mindestens ein Stahl-Gürtel mit Neigung des Kord von $20 - 45^\circ$ zur Umfangsrichtung angeordnet, wobei mindestens ein Stahl-Gürtel eine Überdeckung von 10 - 15 % der Breite der Lauffläche über eine seitlich auf Stoß zum Gürtel verlegte Verstärkung der Seitenwand besitzt.

Durch Textil-Gürtel und Stahl-Gürtel werden einerseits gürtelähnliche Eigenschaften im Fahrverhalten des Reifens erzielt und andererseits Ablöseerschei-

Le A 23 663

nungen, wie sie bei reinem Stahlkord infolge der Verformung bei Notlauf auftreten würde, vermieden.

In einer denkbaren Ausführungsform sind die Enden der den Kern und Kernfüller umgebenden Verstärkungen, die aus mindestens einer Lage Textilkord- oder Stahlkord-Gewebe bestehen, beiderseits der Symetrie-Ebene im Abstand von 24-40 % - bezogen auf den Abstand der Schultern - verankert.

Durch das Heraufziehen der Verstärkungen erfolgt die Verbindung mit den oberen Lagen in einem Bereich, der nur geringen Durchbiegungen unterworfen ist und somit eine gute Härteabstufung zwischen beiden gewährleistet. Auch die Fertigung wird vereinfacht, da die Unterkonstruktion der Seitenwand auf einer besonderen Maschine vorgefertigt werden kann.

In einer vorteilhaften Ausführungsform ist mindestens eine Verstärkungslage aus radialem oder unter 45-20° geneigtem Stahlkord in der Seitenwand angeordnet, der einen Steifigkeitsfaktor

$$V_F > 11 \cdot 10^4$$

besitzt, welcher sich aus dem Produkt von Biegesteifigkeitsfaktoren S multipliziert mit einem Kompressionswert, welcher $\geq$ 220 N ist, des gedrillten Kord ergibt.

Le A 23 663

- 7 -

0192112

Da der Gummi die Kräfte in Richtung der Wand nur bedingt aufnehmen kann, wurde erfindungsgemäß eine Verstärkungseinlage aus Stahlkord vorgeschlagen, die einen Steifigkeitsfaktor $V_F > 11 \cdot 10^4$ besitzen muß.

Der Berechnung liegt die Formel zugrunde

$$V_F = S \cdot n \cdot Comp_{max}$$

wobei der Biegesteifigkeitsfaktor $S$ nach Schlenker bei $30^0$ Biegewinkel ermittelt wird und n die Anzahl der Seile angibt, während zur Ermittlung des Kompressionsverhaltens Comp der gedrillte Kord in Gummi nach bekannter Prüfmethode eingebettet wird, um dann zwischen zwei Spannbackenpaaren zusammengepreßt zu werden, wobei die maximale Last gemessen wird.

In einer Ausführungsform ist beiderseits der Symetrie-Ebene eine Schicht aus hochelastischem Gummi unterhalb der Lauffläche bzw. Seitenwand angeordnet ist.

Durch Einbau der hochelastischen Schicht in den Reifen wird der Federkomfort verbessert, der Rollwiderstand verringert und eine starke Hitzebildung vermieden.

In einer anderen Ausführungsform besteht die äußere im Spritzguß aufgetragene Schicht, die sich von einem Felgenhorn zum gegenüberliegenden Felgenhorn erstreckt, aus einteiligem Gummi.

<u>Le A 23 663</u>

Durch das Umspritzen bei Drücken von 2000 N/cm$^2$ wird der aus einzelnen Teilen zusammengesetzte Unterbau durch eine von Felgenhorn zu Felgenhorn durchgehende Schicht zu einer Einheit verbunden, die im Verbund alle von außen kommenden Kräfte übernimmt und weiterleitet. Gleichzeitig können Gummiwerkstoffe mit hochwertigen Eigenschaften verwendet werden, die wegen ihrer mangelnden Konfektionsklebrigkeit bei Raumtemperatur nur im Spritzgußverfahren eine intensive Verbindung mit der Unterkonstruktion eingehen. Weiter wird bei gespritzten Laufflächen infolge der Molekularverdichtung der Abrieb (10 %) verringert.

In einer erprobten Ausführungsform ist mindestens 70 % des im Spritzguß verarbeiteten Gummis Chlorbutadienkautschuk mit Isocyanatvernetzung.

Der gewählte Werkstoff hat den Vorteil, daß er sehr hitzebeständig ist, einen geringen Rollwiderstand besitzt und sich durch eine gute Bodenhaftung auszeichnet. Gleichzeitig wird durch die Vernetzung mit Isocyanat die Alterungsbeständigkeit gegenüber dem üblichen Vulkanisationsmittel Schwefel verbessert.

Weiter ist zur Herstellung eines Luftreifens ein Verfahren mit folgenden Verfahrensschritten bekannt:

a) Mittels eines auf die Innenkontur des Reifens expandierenden Gummiringes wird eine Innenplatte geformt,

Le A 23 663

b) auf beiden Seiten wird je ein vorgefertigtes inneres Seitenwandteil, welches aus Kern, Kernfüller und gummierter Verstärkungslage mit teilweiser Abdeckung aus abriebfester Mischung (18) besteht, seitlich zugelegt und angedrückt,

c) mindestens zwei umlaufende, gummierte Verstärkungslagen werden im Bereich zwischen den vom Kern kommenden Verstärkungslagen so aufgelegt, daß sich die Randbereiche mindestens einiger, seitlich benachbarter Verstärkungslagen um mehr als 25 mm überdecken,

d) der so gewonnene Rohling wird auf 50-80 % vorvulkanisiert,

e) der Rohling wird in eine Profilform (40) gelegt und mit einer von Felgenhorn zu Felgenhorn durchgehenden, äußeren Schicht aus Gummi umspritzt,

f) der Reifen wird in der Profilform (40) ausvulkanisiert.

Der Vorteil des Verfahrens besteht darin, daß der Reifen aus vorgefertigten Baugruppen, deren Einzelteile je nach den speziellen Anforderungen ausgelegt sein können, in einer solchen Form aufgebaut werden kann, die den geforderten Fahr-, Not- und Festigkeitseigenschaften am besten gerecht wird. Durch die Vorfertigung von Baugruppen auf einfacheren Maschinen kann die Konfektionszeit des Reifens wesentlich reduziert werden. Weiter wird infolge der Vorvulkanisation mit vorzugsweise 60-70 % die Fertigvulkanisationszeit in der teuren segmentierten

Le A 23 663

Profilform auf 3 bis 5 Minuten begrenzt, wobei die gleich verteilte Wärme des Spritzprozesses den Vorgang intensiv unterstützt. Schließlich hat das Verfahren Wege aufgezeigt, an sich günstige Werkstoffe, die leider bei Raumtemperatur nur geringe Konfektionierklebrigkeit besitzen, in Verbindung mit einem konfektionierten Reifen zu verarbeiten.

Für Verstärkungslagen sind Korde aus Textil und/oder Stahl geeignet.

Reifen der beschriebenen Ausführung können aus jedem beliebigen Natur- oder Synthese-Kautschuk hergestellt werden. Besonders geeignet sind Naturkautschuk, Styrol-Butadien-Kautschuk, Polybutadien-Kautschuk, Ethylen-Propylen-Terpolymerisat-Kautschuk sowie Chloropren-Kautschuk.

Nachfolgend sind die Eigenschaften und Zusammensetzungen geeigneter Kautschukmischungen für die wichtigsten Bauteile angegeben.

Le A 23 663

**Rezeptur für Lauffläche**

| | |
|---|---|
| Chlorbutadien-Kautschuk | 100,0 |
| Stearinsäure | 3,0 |
| Ruß | 35,0 |
| Zinkoxid aktiv | 2,0 |
| Mineralöl aromatisch | 17,0 |
| Magnesiumoxid | 4,0 |
| octyliertes Diphenylamin | 2,0 |
| 2-Merkaptobenzimidazol | 0,5 |
| Isocyanat | 2,0 |
| Triethylendiamin | 0,05 |
| | 165,55 |

| | | |
|---|---|---|
| Zugfestigkeit | 18,5 | MPa |
| Bruchdehnung | 575 | % |
| Spannungswert 100 % | 2,7 | MPa |
| Spannungswert 300 % | 10,4 | MPa |
| Weiterreißfestigkeit | 210 | N/4 mm |
| Härte bei 20° C (Shore A) | 68 | |
| Härte bei 70° C (Shore A) | 64 | |
| Elastizität 20° C | 43 | |
| Elastizität 70° C | 62 | |
| DIN-Abrieb (40er Schmirgel) | 189 | mm³ |
| DIN-Abrieb (60er Schmirgel) | 111 | mm³ |
| Pendelreibung naß | 47 | |
| Pendelreibung trocken | 98 | |

Le A 23 663

Rezeptur für Gummierung der Verstärkung
und Verstärkungslagen

| | |
|---|---|
| Chlorbutadien-Kautschuk | 100,0 |
| Polybutadien-Kautschuk | 3,0 |
| Stearinsäure | 3,0 |
| Magnesiumoxid | 4,0 |
| Diphenylamin-Derivat | 2,0 |
| N-(1,3-Dimethylbutyl)-N-phenyl-p-phenylendiamin | 1,0 |
| gefällte Kieselsäure | 10,0 |
| Ruß | 25,0 |
| aromatischer Polyether | 5,0 |
| Zinkoxid | 5,0 |
| Schwefel | 0,5 |
| Formaldehyd-Kieselsäure-Gemisch | 4,6 |
| Resorcin-Derivat-Gemisch | 8,0 |
| | 171,1 |

| | |
|---|---|
| Mischungsplastizität (DH/DE) | 875/20 |
| Mooney-Plastizität (ML-4) $100^0$ C | 59 |
| Mooney-scorch time (5 ME/$120^0$ C) | 11 |
| Vulkameter (Bayer-Frank) bei $150^0$ C Umsatzzeit $t_{90}$ (min.) | 38 |

Mechanische Werte

| | |
|---|---|
| Vulkanisation (min./$150^0$ C) | 20 |
| Zugfestigkeit (MPa) | 16,6 |
| Bruchdehnung (%) | 475 |
| Spannungswert 100 % (MPa) | 3,1 |

Le A 23 663

| | |
|---|---|
| Spannungswert 300 % (MPa) | 10,1 |
| Härte (Shore A) | 73 |
| Stoßelastizität (%) | 38 |
| Weiterreißfestigkeit (N/4mm) | 157 |
| Dichte (g/cm³) | 1,38 |

## Rezeptur für Kernfüller bzw. hochelastische Schicht

| | |
|---|---|
| Naturkautschuk | 100,0 |
| Zinkoxid | 40,0 |
| Zinkoxid aktiv | 20,0 |
| Ruß | 35,0 |
| N-Isopropyl-N'-phenyl-p-phenylen-diamin | 1,0 |
| 2,2,4-Trimethyl-1,2-dihydro-chinolin | 0,5 |
| gefällte Kieselsäure | 8,0 |
| Schwefel | 3,6 |
| Benzothiazyl-2-cyclohexyl-sulfenamid | 0,7 |
| Dibenzothiazyldisulfid | 0,3 |
| Resorcin-Stearinsäure-Gemisch | 1,2 |
| Formaldehyd-Kieselsäure-Gemisch | 1,6 |
| N-Cyclohexylthiophthalimid | 0,2 |
| | ———— |
| | 212,10 |

| Mischungsplastizität (DH/DE) | 450/12 |
| Mooney-Plastizität (ML-4) | 25,0 |
| Mooney-scorch time (5 ME/120°C) | 18,5 |
| Dichte (g/cm³) | 1,3 |
| Vulkanisation (min./150°C) | 10 |
| Zugfestigkeit (MPa) | 17,1 |
| Bruchdehnung (%) | 480 |
| Spannungswert 100 % (MPa) | 2,6 |
| Spannungswert 300 % (MPa) | 9,9 |
| Weiterreißfestigkeit (N/4mm) | 190 |
| Härte bei 20/70°C (Shore A) | 63/- |
| Elastizität 20/70C (%) | 71/- |

Die Erfindung ist in einem Beispiel dargestellt und wird nachstehend beschrieben, Es zeigen

Fig. 1)    Abmessungen und Querschnitt eines Reifens

Fig. 2)    Querschnitt eines Reifens mit Seitenverstärkungen

Fig. 3)    Bautrommel für Seitenwandteil nach dem Auflegen der Einzelteile

Fig. 4)    Bautrommel für Seitenwandteile nach dem Formen

Fig. 5)    Bautrommel für Unterbau

Fig. 6)    Segmentierte Profilform mit Injektionskanal

Le A 23 663

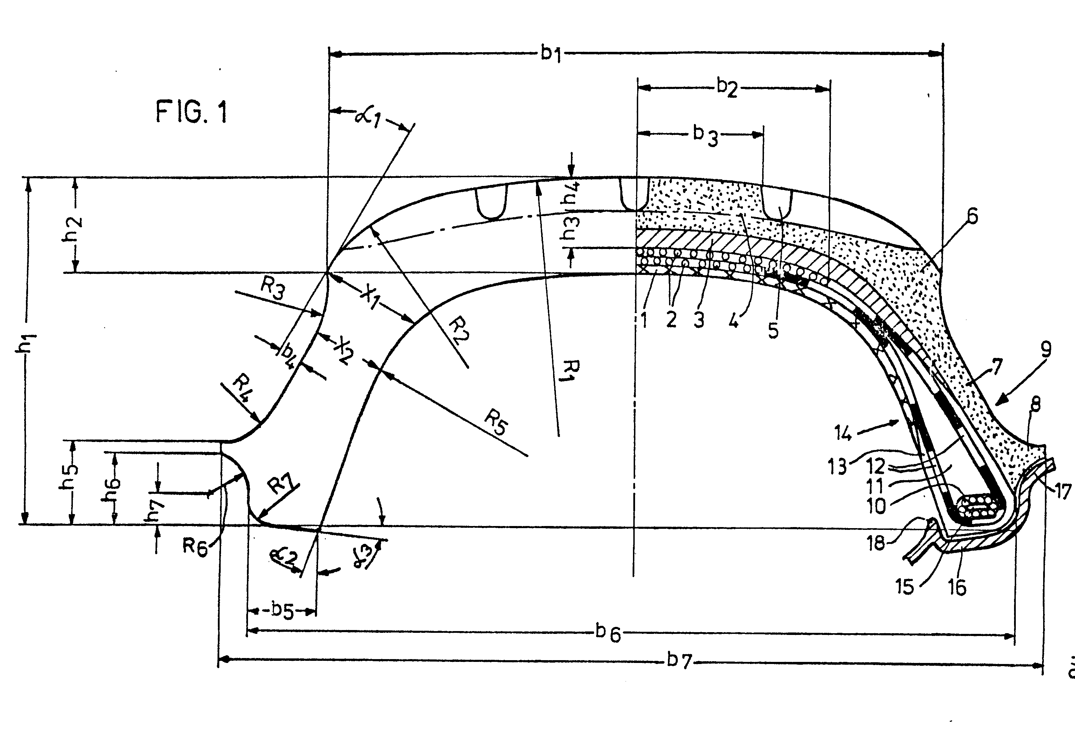

In Fig. 1 ist ein Luftreifen dargestellt, der folgende Abmessungen besitzt, wobei die verwendeten Zeichen dort angegeben sind.

$$\frac{h_1}{b_6} = 0,49; \quad \frac{R_1}{b_6} = 1,41; \quad \frac{b_1}{b_6} = 0,80;$$

$$\alpha_1 = 30^0; \quad \alpha_2 = 15-30^0; \quad \alpha_3 = 5-15^0;$$

$$\frac{R_2}{b_6} = 0,22 \quad\quad \frac{R_5}{b_6} = 0,22$$

$$\frac{R_3}{b_6} = 0,12 \quad\quad \frac{R_6}{b_6} = 0,05$$

$$\frac{R_4}{b_6} = 0,07 \quad\quad \frac{R_7}{b_6} = 0,04$$

$$\frac{h_2}{b6} = 0,13 \quad\quad \frac{b_2}{b1} = 0,35$$

$$\frac{h_3}{h_2} = 0,36 \quad\quad \frac{b_3}{b_1} = 0,24$$

<u>Le A 23 663</u>

$$\frac{h_4}{h_2} = 0,36 \qquad \frac{b_4}{b_1} = 0,06$$

$$\frac{h_5}{h_1} = 0,23 \qquad \frac{b_5}{b_6} = 0,08$$

$$\frac{h_6}{h_1} = 0,19 \qquad \frac{b_7}{b_6} = 1,08$$

$$\frac{h_7}{h_1} = 0,09 \qquad \frac{x_1}{b_1} = 0,15$$

$$\frac{x_2}{b_1} = 0,09$$

Der Reifen besteht aus einer Innenplatte 1, auf der ein Gürtel 2, eine hochelastische Schicht 3 sowie eine Lauffläche 4 mit Profilrillen 5 aufgebaut ist, wobei sich seitlich an die Lauffläche 4 im Bereich der Schulter 6 durchgehend eine äußere Seitenwand 7 mit Gumminase 8 anschließt. Der Reifenfuß 9 besitzt einen Kern 10 mit einem Kernreiter 11, der von einem textilen Kordgewebe 12 umgeben ist, welches an beiden Rändern mit dem Gürtel 2 bei einem Versatz der Lagen von mindestens 25 mm gestoßen ist. Eine hochabriebfeste Mischung 13 umgibt im unteren Bereich das Kordgewebe 12. Die innere Reifenkontur 14 der Seitenwand 7 beginnt in der Fußzehe 15. Der Reifenfuß 9 wird in der Felge 16 zwischen Felgenhorn 17 und Felgenhump 18 gehalten.

Le A 23 663

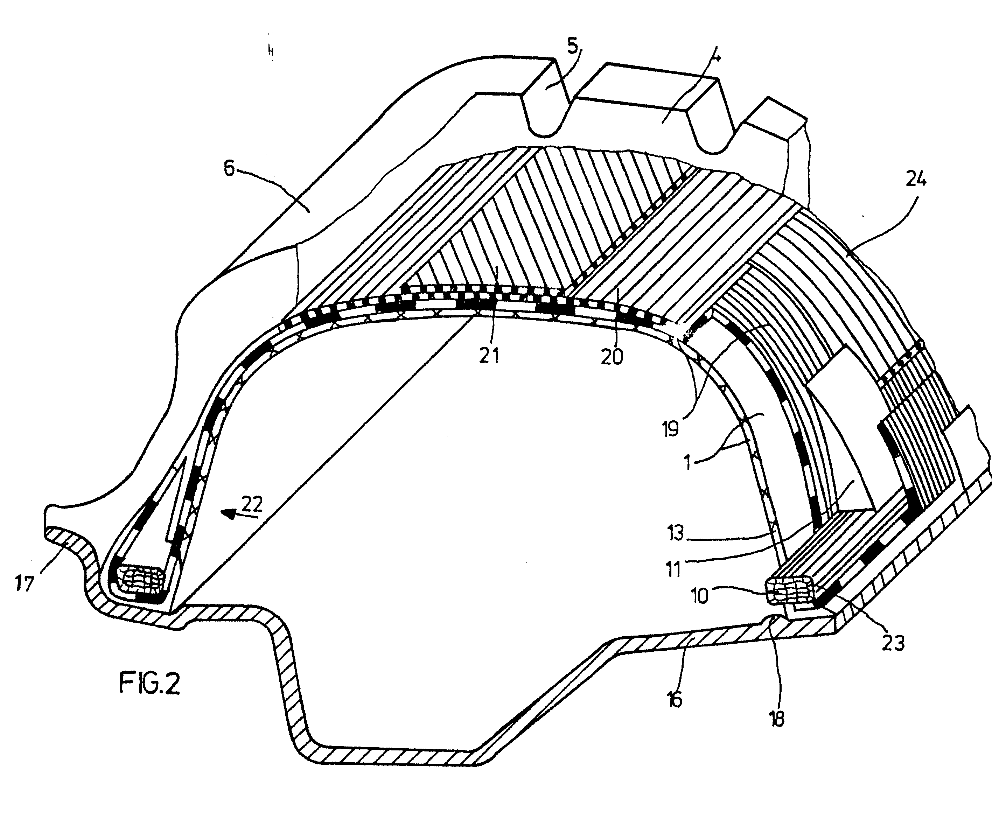

In Fig. 2 ist auf einer Innenplatte 1 eine textile oder
metallene Karkasse 19 aufdubliert. Der Verbund-Gürtel
2 besteht aus einem in Umfangsrichtung laufenden Textil-
Gürtel 20 und mindestens einem Stahl-Gürtel mit einem
Winkel von 20-45⁰ zur Umfangsrichtung, der wiederum die
Lauffläche 4 mit Profilrillen 5 trägt. Im Reifenfuß 22
ist die Karkasse 19 um den mit Gewebeschutzstreifen 23
versehenen Kern 10 einschließlich Kernfüller 11 herumgeschlagen. Im Bereich der Seitenwand 7 ist mindestens
eine Stahlkordlage 24 - beginnend kurz oberhalb des Kerns
10 und endend vor dem Gürtel 2 - auf Stoß angelegt, deren kompressionssteifer Kord in radialer oder dazu unter
20-45⁰ geneigter Richtung verläuft. Die hochabriebfeste
Mischung 13 des Reifenfußes 7 wird in die Felge 16
zwischen Felgenhorn 17 und Humpsteg 18 gehalten.

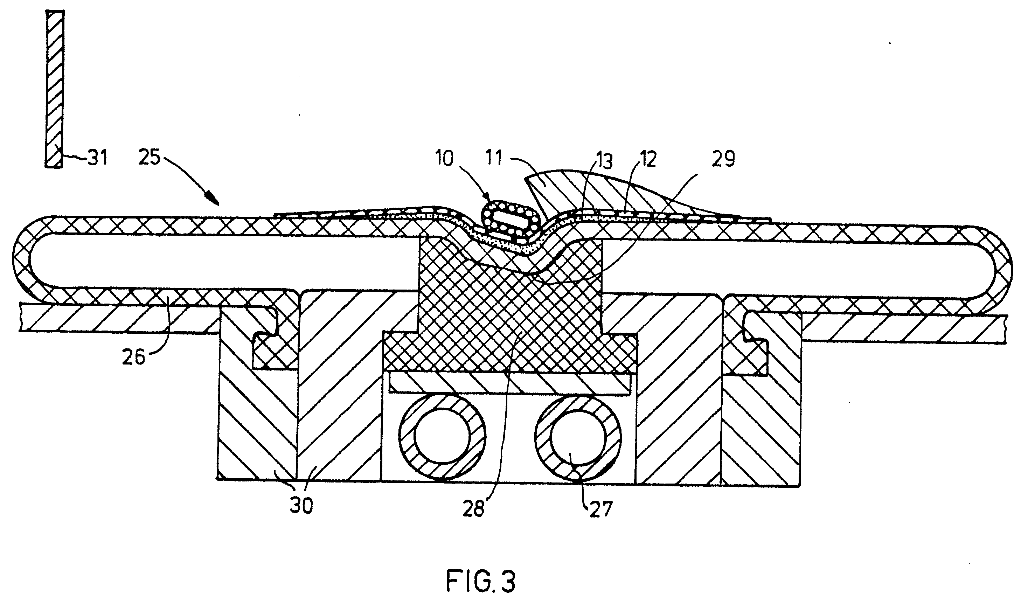

Fig. 3 zeigt eine Bautrommel 25 mit aufblasbarem Fertigungsbalg 26, der in der Mitte von einem durch weitere
Expansionsbälge 27 anhebbaren Gummiteil 28 mit Vertiefung 29 für den Kern 10 unterstützt werden kann und der
durch seitlich verfahrbare Fußklemmen 30 diesen aufrichten kann, wobei ein Konturgeber 31 hilft.

Ein vordublierter Gewebestreifen 12 mit einer abriebfesten Mischung 13 wird auf die flache Bautrommel 25
gelegt. Danach wird mit einer Kernhalterung (nicht gezeichnet) der Kern 10 in Position gebracht. Durch Aufblasen der Expansionsbälge 27 hebt sich das Gummiteil
28, so daß der Gewebestreifen 12 einschließlich Kern 10
in der Vertiefung 29 anliegt. Unter Expandieren des Fertigungsbalges 26 und evtl. Verfahren der Fußklemmen 30
wird dieser aufgerichtet, wobei seitliche Konturgeber
31 den Vorgang unterstützen.

<u>Le A 23 663</u>

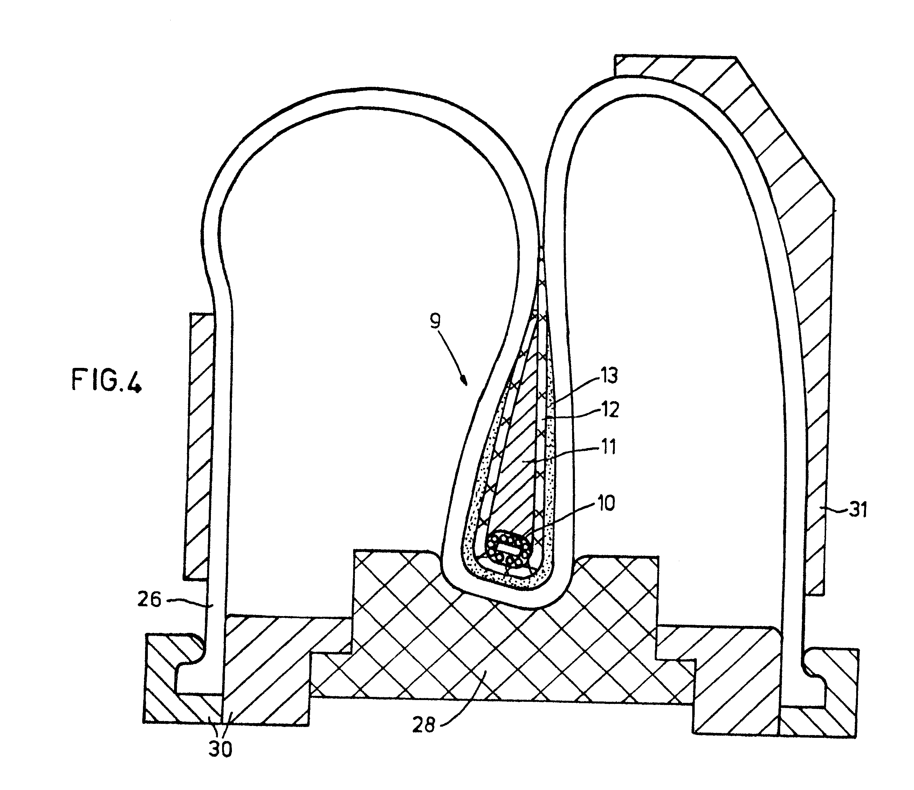

In Fig. 4 ist der innere Reifenfuß 9 in der später eingesetzten Lage dargestellt.

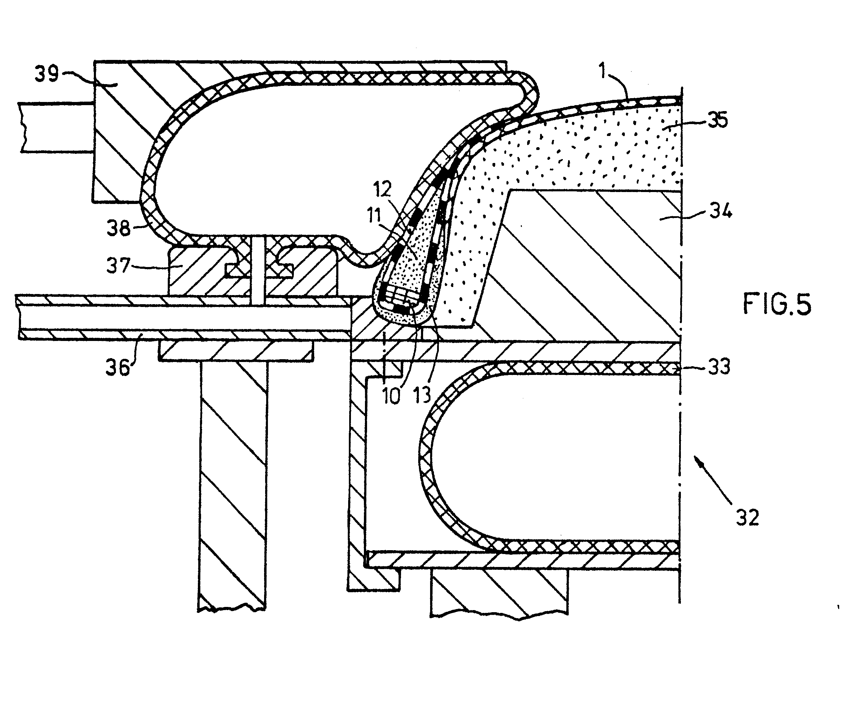

In Fig. 5 ist eine Reifenbautrommel 32 dargestellt, bei der auf radial durch Expansionsbalg 33 verschiebbaren Bühne 34 eine Lage 35 aus Naturkautschuk-Mischung angeordnet ist, die eine zur inneren Reifenkontur korrespondierende Form hat. Auf beiden Seiten befindet sich ein über der Schiene 36 verfahrbarer Lagerschlitten 37 mit einem aufblasbaren Anrollbalg 38, der durch einen Konturgeber 39 seitlich noch gestützt wird.

Die luftdichte Innenplatte 1 wird auf die Lage 35 im unexpandierten Zustand aufgelegt. Nach dem Expandieren wird der vorgefertigte innere Reifenfuß 9 eingelegt und durch den Anrollbalg 38 mit Unterstützung durch den Konturgeber angedrückt. In üblicher Weise werden als Verstärkungslagen zwei Gürtel 2 aus Textil aufgelegt, deren Kord zur Laufrichtung einmal einen positiven Winkel und einmal einen negativen Winkel von 5-23° besitzt. Die Stöße verschiedener Verstärkungslagen, sind seitlich um mindestens 25 mm versetzt. Schließlich wird die hochelastische Schicht 3 aufgelegt. Anschließend wird der Unterbau durch Temperaturzufuhr in einer profillosen Form (nicht dargestellt) auf 50 -70 % vorvulkanisiert, um die notwendige Festigkeit für die weitere Handhabung zu erhalten.

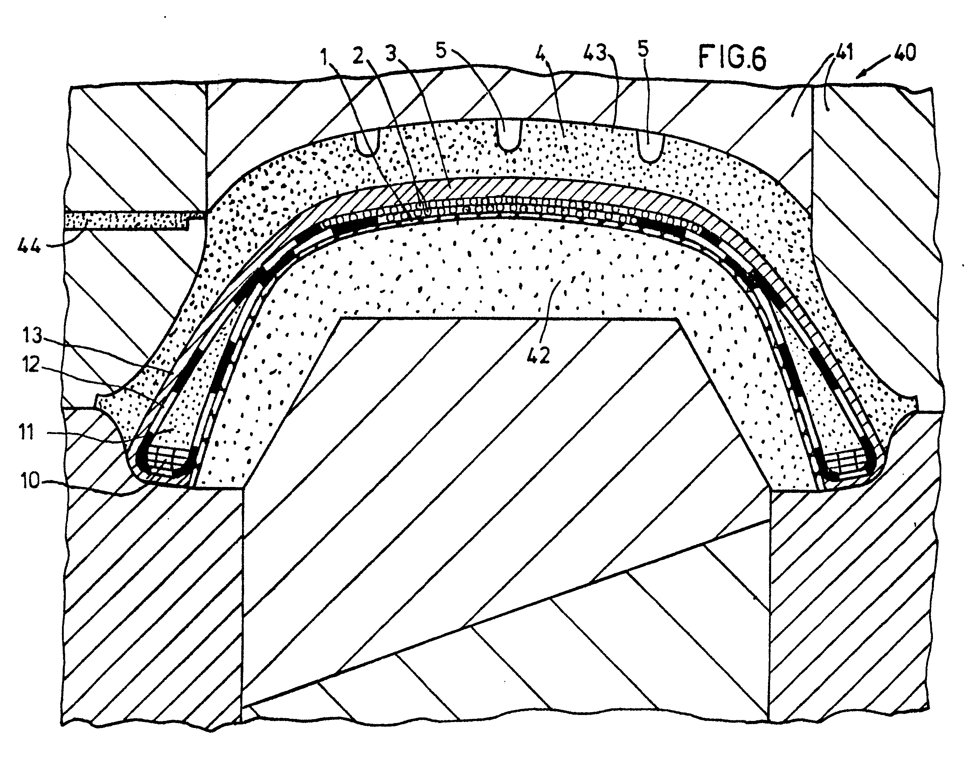

In Fig. 6 ist eine aufheizbare Profilform 40 gezeichnet, die aus mehreren Stahlformteilen 41 und einer Formlage 42

Le A 23 663

aus Silicon-Compound besteht, wobei in dem oberen Teil des Hohlraumes mindestens ein Zuführkanal 44 für das Spritzgußmaterial angeordnet ist.

Der vorvulkanisierte Unterbau wird in die Profilform 40 eingelegt. Nach Schließen der Profilform 40 wird ein hitzebeständiges Elastomer als Lauffläche 9 und äußeres Teil der Seitenwand eingespritzt, bis der Hohlraum 43 von Felgenhorn 17 zu Felgenhorn 17 oberhalb des Unterbaus ausgefüllt ist. Anschließend erfolgt die Vulkanisation des Reifens durch die mittels aufgeheiztem Spritzmaterial eingebrachte Wärme und durch weitere Wärmezufuhr von außen in 3-5 Minuten.

Le A 23 663

Patentansprüche

1. Luftreifen mit Notlaufeigenschaften bei Luftverlust, enthaltend Lauffläche, Verstärkungseinlagen,
Kern, Kernfüller und luftdichte Innen-Platte, dadurch gekennzeichnet, daß der Reifen bei einem Verhältnis Höhe zu Breite zwischen 0,41-0,55 eine
Breite der Lauffläche (4) zwischen den Schultern
(6) von 0,7-0,8 der Felgenbreite besitzt, daß die
Seitenwand (7) im Bereich zwischen Schulter (6) und
dem am axial weiter außenliegenden Felgenhorn (17)
angrenzenden Teil (8) in axialer Richtung Lageänderungen nur nach außen besitzt, wobei der gemittelte Neigungswinkel zur Radialebene 10-40° beträgt
und daß die Gesamtdicke von der Lauffläche (4) mit
Unterbau (1) im Bereich zwischen den Schultern (6)
10-16 % sowie von der Seitenwand (7) 7-12 % der
Felgenbreite beträgt.

2. Luftreifen nach Ansprüchen 1 - 2, dadurch gekennzeichnet, daß die Lauffläche (4) zwischen den
Schultern (6) bei einer Dicke von 50-72 % - bezogen
auf die Gesamtdicke von Lauffläche und Unterbau -
Profiltiefen bis zur Hälfte der obigen Prozentzahlen besitzt.

3. Luftreifen, nach Anspruch 1, dadurch gekennzeichnet, daß die innere Reifenkontur (14) von der Fußzehe (15) an geradlinig unter einem Winkel $\alpha_2$ von
10 - 35 %, insbesondere von 12-18 %, zur Radialebene mit Neigung in Richtung des Zenith verläuft,

Le A 23 663

um dann nach einem Bogen mit einem Radius $R_5$ = 15-30 % - bezogen auf die Reifenbreite - eine Richtung etwa parallel zur Lauffläche (4) einzuschlagen.

4. Luftreifen, nach Ansprüchen 1 - 3, dadurch gekennzeichnet, daß der äußere Übergang von der Lauffläche (4) zur Seitenwand (7) über einen konkaven Bogen erfolgt, dessen Radius $R_3$ = 9-15 % der Felgenbreite bei einer Einschnürtiefe der Seitenwand (7) von 3-6 % der Felgenbreite beträgt.

5. Luftreifen nach Ansprüchen 1 - 4, dadurch gekennzeichnet, daß mindestens zwei Verstärkungslagen (2) als Gürtel aus textilem Kord im Bereich unterhalb der Lauffläche (4) angeordnet sind, von denen mindestens eine eine Überdeckung von 25 mm oder mehr eines Stoßes einer benachbarten Verstärkungslage (2) mit einem seitlichen Rand einer den Kern umgebenden Verstärkungslage (12) aufweist.

6. Luftreifen nach Ansprüchen 1 bis 4, dadurch gekennzeichnet, daß als Verstärkungslagen im Bereich unterhalb der Lauffläche mindestens ein Textil-Gürtel (2) mit entlang des Umfanges laufendem Kord und mindestens ein Stahl-Gürtel mit Neigung des Kords von 20 - 45° zur Umfangsrichtung angeordnet ist, wobei mindestens ein Stahl-Gürtel eine Überdeckung von 10 - 15 % der Breite der Lauffläche über eine seitlich auf Stoß zum Textil-Gürtel verlegte Verstärkung der Seitenwand besitzt.

Le A 23 663

7. Luftreifen nach Ansprüchen 1 bis 6, dadurch gekennzeichnet, daß die Enden der den Kern (10) und Kernfüller (11) umgebenden Verstärkungen (12), die aus mindestens einer Lage Textil- oder Stahlkordgewebe bestehen, beiderseits der Symetrie-Ebene im Abstand von 24 - 40% - bezogen auf den Abstand der Schultern (6) - verankert sind.

8. Luftreifen nach Ansprüchen 1 - 7, dadurch gekennzeichnet, daß mindestens eine Verstärkungseinlage (24) aus radialem oder unter 45 - 20° geneigtem Stahlkord in der Seitenwand (7) angeordnet ist, der einen Steifigkeitsfaktor $V_F > 11 \cdot 10^4$ besitzt, welcher sich aus dem Produkt von Biegesteifigkeitsfaktoren S multipliziert mit einem Kompressionswert, welcher $\geq$ 220 N ist, des gedrillten Kords ergibt.

9. Luftreifen nach Anspruch 1, dadurch gekennzeichnet, daß beiderseits der Symetrie-Ebene eine Schicht (3) aus hochelastischem Gummi unterhalb der Lauffläche (4) bzw. Seitenwand (7) angeordnet ist.

10. Luftreifen nach Ansprüchen 1 - 9, dadurch gekennzeichnet, daß die äußere im Spritzguß aufgetragene Schicht (4, 7), die sich von einem Felgenhorn (17) zum gegenüberliegenden Felgenhorn (17) erstreckt, aus einteiligem Gummi besteht.

11. Luftreifen nach Anspruch 1 - 10, dadurch gekennzeichnet, daß mindestens 70 % des im Spritzguß verarbeiteten Gummis Chlorbutadienkautschuk mit Isocyanatvernetzung ist.

Le A 23 663

12. Verfahren zur Herstellung eines Luftreifens gemäß Ansprüchen 1 - 11, dadurch gekennzeichnet, daß folgende Verfahrensschritte durchgeführt werden:

a) Mittels eines auf die Innenkontur des Reifens expandierenden Gummiringes wird eine Innenplatte geformt,

b) auf beiden Seiten wird je ein vorgefertigter innerer Reifenfuß (9), welcher aus Kern (10), Kernfüller (11) und gummierter Verstärkungslage (12) mit teilweiser Abdeckung aus abriebfester Mischung (13) besteht, seitlich zugelegt und angefdrückt,

c) mindestens zwei umlaufende, gummierte Verstärkungslagen (2, 20, 21) werden im Bereich zwischen den beiden inneren Reifenfüßen (9) so aufgelegt, daß sich die Randbereiche mindestens einiger, seitlich benachbarter Verstärkungslagen um mehr als 25 mm überdecken,

d) der so gewonnene Rohling wird auf 50-80 % vorvulkanisiert,

e) der Rohling wird in eine Profilform (40) gelegt und mit einer vom Felgenhorn (17) zu Felgenhorn (17) durchgehenden, äußeren Schicht (4,7) aus Gummi umspritzt,

f) der Reifen wird in der Profilform (40) ausvulkanisiert.

FIG. 1

FIG.2

FIG.3

FIG.4

LeA 23 663

0192112

FIG.5

FIG.6

1 2 3 5 4 43 5

41 40

44

42

13
12
11
10

LeA 23663